# EUROPEAN PATENT SPECIFICATION

(11) **EP 3 160 118 B1**
(45) Date of publication and mention of the grant of the patent: **04.12.2019**
(21) Application number: 15190378.8
(22) Date of filing: 19.10.2015
(51) Int. Cl.: H04M 3/56, H04M 7/00

(54) **SYSTEM AND METHOD FOR SETTING UP A GROUP CALL**
SYSTEM UND VERFAHREN ZUM AUFBAU EINES GRUPPENRUFES
SYSTÈME ET PROCÉDÉ D'ÉTABLISSEMENT D'UN APPEL DE GROUPE

(43) Date of publication of application: 26.04.2017
(73) Proprietor: Rebtel Networks AB, 111 44 Stockholm (SE)
(72) Inventor: DAHLQVIST, Johan, 167 56 Bromma (SE); PRETO, Vasco, 176 69 Järfälla (SE); KAMINSKI, Andrew, 187 30 Täby (SE); KYRITSIS, Thomas, 191 48 Sollentuna (SE); LINDHE, Pär, 126 51 Hägersten (SE); SKOGLUND, Thomas, 113 39 Stockholm (SE); KUMAR, Suresh, 145 67 Norsborg (SE); MORTAZAVI, Amir, 170 69 Solna (SE); CONNOR, Christopher, 114 27 Stockholm (SE)
(74) Representative: Bjerkéns Patentbyrå KB (Stockholm)

(56) References cited:
- US-A1- 2008 293 403
- US-A1- 2010 120 405

## Description

### THE BACKGROUND OF THE INVENTION AND PRIOR ART

The present invention relates generally to cost-efficient setup of group calls between mobile terminals. More particularly the invention relates to a system according to the preamble of claim 1 and a corresponding method. The invention also relates to a computer program product and a processor-readable medium.

Since an increasing amount of voice traffic is now being conveyed over the Internet, the telephone charges are gradually lowered. For example, the pricing structure for both landline and mobile phone calls within a specific operator's network, country and/or region is often such that a flat rate applies regardless of usage. Typically, however, long distance calls are still relatively expensive, even though this may not be fully justified from a technical point-of-view. In particular, group calls, i.e. voice calls including three or more parties, may become very expensive if the parties involved are located in different countries. Therefore, various group-call solutions have been developed, which involve Internet-based technology, and aim at reducing the costs.

US 6,256,389 shows an integrated telecommunication collaboration system, which allows close integration of desktop computer applications, data communications and public switched telephone network voice connections. Here, client software includes a voice agent for establishing telephone sessions, a data agent for establishing associated data sessions, a communications agent which synchronizes the data and voice agents, and an integration agent which integrates the data and voice communications with a computer operating system and with various applications. The integrated telecommunication collaboration system controls the establishment of harmonized calls by sending and receiving various requests and status messages to and from a server and another client.

US 2013/0331075 describes methods, systems and devices for joining a conference call on an electronic device. Methods are described which include steps of receiving a communication and determining at least one replacement conference call phone number based on information in the communication. Further steps may involve determining that the replacement conference call phone number is a preferred conference call phone number. Moreover, steps may be included that involves initiating a dialling sequence using the preferred conference call phone number.

US 7,209,947 discloses a system and method for providing data network-assisted conference service to a wireless terminal. Conference-related information is here received from a conference originator and stored. Prior to conference establishment time, a conference notification message is sent to the wireless terminal. A conference connection request is sent by the wireless terminal in response to the conference notification message, and a conference connection is established between the wireless terminal and a conference bridge that connects all conference participants.

US 2014/0362742 reveals a solution for facilitating the set-up of a conference call over a telecommunication network, where the call is between a first user and a one or more second users of the network. For example, via the solution, a user can establish a conference call in a very short time and easy way. In addition, he/she is able to book and manage their conferences through a smartphone app, or a mail server client.

US 2008/0293403 relates to a system that provides functionality for mobile communications service bridging with distributed service gateway call managers that allow application clients running on users' communication devices to be served by any of the available service gateways.

US 2010/01200405 relates to method and system for optimizing the process of initiating a phone call on a mobile phone wherein the call routing is monitored and managed through the Internet.

### PROBLEMS ASSOCIATED WITH THE PRIOR ART

Thus, various cost-efficient solutions are known for setting up group calls, inter alia based on conference bridges. However, these solutions have one thing in common, namely they are relatively complicated to implement, especially for mobile subscribers.

### SUMMARY OF THE INVENTION

The object of the present invention is therefore to alleviate the above problem, and offer a cost-efficient, reliable and user-friendly group-calling solution for mobile users, which can be applied in a straightforward manner regardless of whether the parties involved are located in the same network, or on different continents.

According to one aspect of the invention, the object is achieved by the initially described system, wherein in response to the user-generated call-setup command, the software-implemented call handling tool in the originating device is also configured to make a first call to a first bridge node over the public land mobile network (PLMN) using a first telephone number stored in the originating device.

This system is advantageous because the signaling relating to the voice connection to be established over the PLMN can be performed independently from the signaling involving the server node, which aims at paging the terminating devices and informing their users of the incoming group call. Thus, the overall call setup can be made highly efficient. In fact, depending on the latencies in the different networks, the terminating devices may even establish connections with a bridge node before the originating device does so.

According to one preferred embodiment of this aspect of the invention, the originating device contains a set of different telephone numbers, and the software-implemented call handling tool in the originating device is configured to select the first telephone number based on a location of the originating device. Thereby, for instance, the first call can be made to a geographically nearest first bridge node, which is normally advantageous from a cost point-of-view.

According to another preferred embodiment of this aspect of the invention, in response to the first call, the first bridge node, in turn, is configured to send a first bridge-acknowledge message to the server node. The first bridge-acknowledge message specifies a first network address of the first bridge node. Hence, the first bridge-acknowledge message informs the server node about which primary bridge node that will be employed for setting up the group call.

According to yet another preferred embodiment of this aspect of the invention, in response to the call-setup request, the server node, in turn, is configured to send a respective service message to each of the terminating devices. The service messages indicate an identity of the originating device and a petition to establish a voice connection with the terminating devices. Consequently, the service messages inform the terminating device of the incoming call from the originating device.

Preferably, in response to a received service message, the software-implemented call handling tool in a terminating device is configured to generate an alert signal, which is adapted to notify a user of the terminating device of the incoming call from the originating device. For example, the alert signal may involve producing an acoustic signal, a text message, graphics and/or an optic signal.

According to a further preferred embodiment of this aspect of the invention, after having started to generate the alert signal, the software-implemented call handling tool in each of the terminating devices is configured to make a reply call to a second bridge node in response to a user's accept command. Here, the accept command may for example be represented by activation of: an on-screen input means, a key or a button, or by a voice command. The reply call is made over the public land mobile network using a second telephone number, which preferably is stored in the respective terminating device. In fact, the second telephone number may be identical to the first telephone number. Thus, in a simplest possible implementation of the invention, all devices only store a single telephone number, which is used by the software-implemented call handling tool both for placing calls and accepting incoming calls.

However, according to a preferred embodiment of this aspect of the invention, each terminating device contains a set of different telephone numbers, and the software-implemented call handling tool is configured to select the second telephone number based on a location of the terminating device. Thereby, analogous to the first call, the reply calls can made to a second bridge node that is a geographically nearest to each of the terminating devices. Further preferably, if possible, each reply call is made to a second bridge node within a home network of the terminating device in question. Namely, this is most advantageous from a cost point-of-view.

According to still another preferred embodiment of this aspect of the invention, in response to the reply call, each second bridge node, in turn, is configured to send a respective second bridge-acknowledge message to the server node. The second bridge-acknowledge message specifies a second network address of the second bridge node. Thus, based on the second bridge-acknowledge message, the server node is informed of which second bridge nodes that will be used to set up the call to the terminating devices. In response to the first and second bridge-acknowledge messages, the server node is configured to send bridge-prompting messages to the first and second bridge nodes respectively. Consequently, it is confirmed to the first and second bridge nodes in a simple and straightforward manner that a call will be set up between the originating and terminating devices using the thus identified first and second bridge nodes.

According to another preferred embodiment of this aspect of the invention, in response to the bridge-prompting messages, the first and second bridge nodes are configured to cause connections to be established between the originating device and each of the terminating devices over the conference bridges. In practice, this typically means that once the call has been set up to a particular device, a respective connection is established directly between each device and the first conference bridge. I.e., the payload traffic will go exclusively through the first bridge node, which, normally, is located relatively near the originating device.

According to a further preferred embodiment of this aspect of the invention, if a connection has been established between the originating device and at least one first device of the at least two terminating devices, and no user's accept command has been received in at least one non-connected device of the called terminating devices within a response interval after having initiated the first type of alert signal; the server node is configured to send a call-in-progress notification to the non-connected device(s). In response to this notification, the software-implemented call handling tool in the one non-connected device(s) is configured to generate a second type of alert signal. This signal, in turn, is adapted to notify a user of an ongoing call to which he/she may choose to connect. Thus, in the event that a callee missed to accept the initial call invitation, he/she may conveniently join the conversation at any time later as long as the call is still in progress.

According to yet another preferred embodiment of this aspect of the invention, a database that is accessible by the server node stores a definition of a group of subscribers. Each of the subscribers in the group is associated with a particular device, and if a connection has been established between a set of devices associated with a sub-group of subscribers within the group, the server node is configured to send a call-in-progress notification to each non-connected device that is associated with a subscriber of the group, however that is not included in the sub-group. In response to the call-in-progress notification, the software-implemented call handling tool in each of the non-connected devices is configured to generate a second type of alert signal, which is adapted to notify a user of an ongoing call to which the non-connected device can be connected. Hence, even if a party was not actually called, he/she may choose to join an ongoing group call provided that the user in question belongs to the group in name of which the call was initiated.

Preferably, in response to a received user command designating the ongoing call, the software-implemented call handling tool in the non-connected device is configured to make the reply call to the second bridge node of the at least one bridge node over the public land mobile network using the reply telephone number, i.e. as if the call had been answered in connection with the original call setup.

According to still another preferred embodiment of this aspect of the invention, after that a group call has been set up between the originating device and at least two terminating devices, the software-implemented call handling tool in each of said devices is configured to provide the parties with a set of call-related services. Specifically, via the software-implemented call handling tool, a user may: generate a call-setup request in respect of at least one additional terminating device to be included in the group call in response to a call-setup command from a user; send a call-disconnect request in respect of at least one of said devices to the server node, and/or send a mute request in respect of at least one of said devices to the server node. Thereby, the group-call parties are given a useful toolbox for handling various situations as the call is in progress.

According to another aspect of the invention, the object is achieved by the method described initially, which further involves making, via the software-implemented call handling tool in the originating device, a first call to a first bridge node. The first call is made in response to the call-setup command, and is effected over PLMN using a first telephone number that is stored in the originating device. The advantages of this method, as well as the preferred embodiments thereof, are apparent from the discussion above with reference to the proposed diagnostic apparatus.

According to a further aspect of the invention the object is achieved by a computer program product loadable into the memory of at least one processor, and includes software adapted to implement the method proposed above when said program is run on at least one processor.

According to another aspect of the invention the object is achieved by a processor-readable medium, having a program recorded thereon, where the program is to control at least one processor to perform the method proposed above when the program is loaded into the at least one processor.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an overview of a system according to one embodiment of the invention; and
- Figure 2: illustrates, by means of a flow diagram, the general method according to the invention.

### DESCRIPTION OF PREFERRED EMBODIMENTS OF THE INVENTION

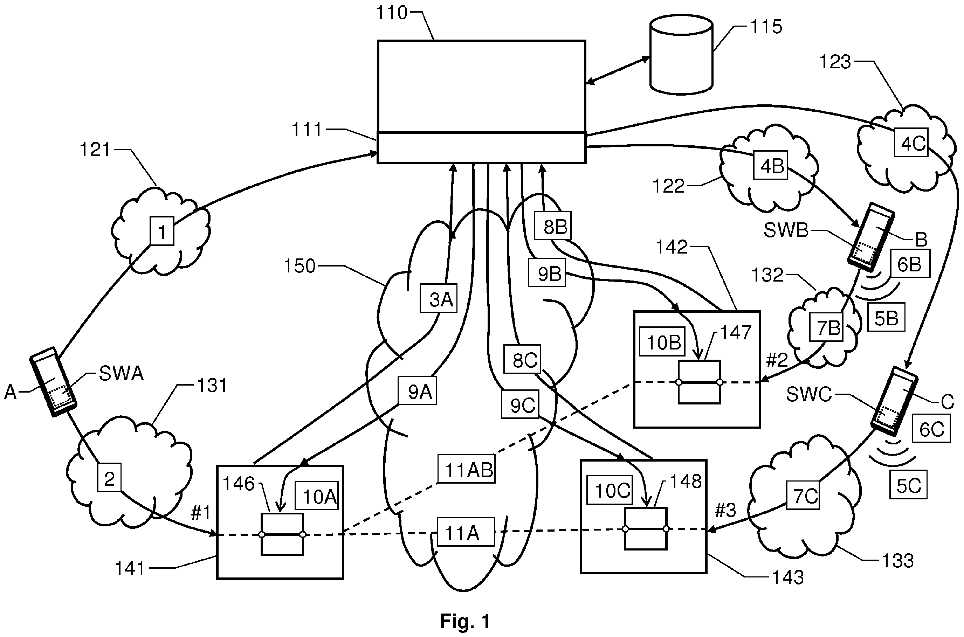

Initially, we refer to Figure 1, which shows an overview of a system according to one embodiment of the invention for setting up a group call between one originating device A and at least two terminating devices B and C respectively. The originating and terminating devices A, B and C each has access to a PLMN 131, 132 and 133 respectively as well as a mobile data network 121, 122 and 123 respectively via one or more respective wireless interfaces, e.g. based on radio, optic or inductive technology. Here, the originating device A is presumed to have access to a first PLMN 131. Analogously, the terminating devices are presumed to have access to second and third PLMN:s 132 and 133 respectively. Furthermore, the devices A, B and C are presumed to have access to first, second and third mobile data networks 121, 122 and 123 respectively. Each of the mobile data networks 121, 122 and 123, in turn, is connected to at least one respective bridge node 141, 142 and 143. The bridge nodes 141, 142 and 143 are further connected to a data network 150, e.g. the Internet Moreover, the devices A, B and C include a respective software-implemented call handling tool SWA, SWB and SWC, e.g. a so-called app, which is configured to assist a user in the process of placing and receiving group calls.

The proposed system further includes a server node 110, which is connected to the mobile data networks 121, 122 and 123 as well as to the data network 150. Hence, the server node 110 may communicate with the bridge nodes 141, 142 and 143 over the data network 150.

According to the invention, a first user who wants to make a group call to second and third users associated with the devices B and C respectively generates a call-setup command in the originating device A, which call setup command identifies the second and third users, for instance via their telephone numbers. Alternatively, the first user may select a predefined group in the software-implemented call handling tool SWA, which group includes the second and third users. Thereby, a group call is automatically set up to all the members of that group. Further details regarding this process will be described below.

In any case, each of the devices A, B and C is adapted for wireless voice communication over at least one mobile telephone interface, e.g. in accordance with any of the standards: GSM (Global System for Mobile Communications/Groupe Special Mobile), CDMA2000, UMB (Ultra Mobile Broadband) LTE (Long-Term Evolution), UMTS (Universal Mobile Telecommunications System), and/or GAN (Generic Access Network). Moreover, each of the devices A, B and C is adapted for wireless data communication, e.g. in accordance with any of the standards: GPRS (General packet radio service), EDGE (Enhanced Data rates for GSM Evolution), HSPA (High Speed Packet Access), HSPA+ (Evolved High-Speed Packet Access) and/or WLAN/Wireless Ethernet of the IEEE 802.11 family (so-called WiFi). Consequently, the devices A, B and C may be represented e.g. by smartphones, tablets, PDA:s (personal digital assistant) or laptops.

In response to the call-setup command, the software-implemented call handling tool SWA in the originating device A is configured to send a call-setup request 1 from the originating device A to the server node 110 over the first mobile data network 121. The call-setup request 1 indicates identities of the terminating devices B and C, such as their telephone numbers.

In response to the call-setup command, the software-implemented call handling tool SWA in the originating device A is also configured to make a first call 2 to a first bridge node 141 that is connected to the first PLMN 131 using a first telephone number #1 stored in the originating device A.

The server node 110, in turn, is configured to receive the call-set-up request 1, preferably via an application programming interface (API) 111, and based thereon, set up a call between the originating device A and the terminating devices B and C over at least one conference bridge 146 in the bridge node 141. This process will be described in further detail below.

Preferably, the originating device A contains a set of different first telephone numbers #1, and the software-implemented call handling tool SWA is configured to select a particular first telephone number #1 based on a current location of the originating device A. Thereby, the first call 2 can for example be made to the bridge node 141, which is geographically nearest to the originating device A; or more preferably, to a physically nearest bridge node 141 that is also connected to the PLMN 131 to which the originating device A is currently attached.

The server node 110 is preferably communicatively connected to a database 115 storing data about all registered users in the system, including the subscribers associated with the devices A, B and C. Thereby, upon receipt of the call-setup request 1, the server node 110 may verify that the users involved are authorized, and thus allow a group call to be set up. It is further advantageous if the server node 110 is configured to repeatedly feedback updated data from the database 115 to the devices A, B and C, or more precisely to *all* subscribers in the system, concerning which of the contacts in a particular device's contact list who has a subscription with the system (i.e. that is listed in the database 115). Namely, thereby, the software-implemented call handling tool SWA may be arranged to (i) indicate whether or not a contact in the device's contact list is available via the system and/or (ii) automatically choose to setup any group call via the system to callees who are available through this system.

The software-implemented call handling tool SWA in the originating device A is configured to make the first call 2 prior to sending the call-setup request 1 to the server node 110; or in parallel with, or after, sending the call-setup request 1 to the server node 110. Generally, to minimize the call-setup time, it is desirable that the call-setup request 1 is sent out and the first call 2 is made as soon as possible. However, in some technical environment it is necessary that there is a certain temporal relationship between them. It is therefore advantageous that the invention offers full freedom in terms of whether the call-setup request 1 is sent out before, in parallel with or after that the first call 2 is made.

In any case, in response to the first call 2, the bridge node 141 is configured to send a first bridge-acknowledge message 3A to the server node 110. The first bridge-acknowledge message 3A specifies a first network address of the bridge node 141 so as to inform the server node 110 of the identity of the bridge node 141.

In response to the call-setup request 1, the server node 110 is configured to send a respective service message 4B and 4C to each of the terminating devices B and C. The service messages 4B and 4C indicate an identity of the originating device A, for instance a caller line identification (CLI), and a petition to establish a group-call connection with the terminating devices B and C respectively.

In response to the service message 4B and 4C, each of the software-implemented call handling tools SWB and SWC in the terminating devices B and C is configured to generate an alert signal 5B and 5C that is adapted to notify a user of the device of an incoming call from the originating device A, for example by producing an acoustic signal, showing a text message on a display, showing graphics on a display, activating a light source and/or causing the device to vibrate.

After having initiated the alert signal 5B and 5C respectively, the software-implemented call handling tools SWB and SWC are configured to wait for a respective accept command 6B or 6C from the user of the device. If such an accept command 6B/6C is received in the terminating device B and/or C, the software-implemented call handling tool SWB and/or SWC respectively is configured to make a reply call 7B and/or 7C to a bridge node 142 and/or 143 respectively.

Alternatively, the software-implemented call handling tools SWB and SWC may be configured to make the reply call 7B and 7C to the bridge nodes 142 and 143 respectively at any time after receiving the service message 4B and 4C respectively. I.e. the reply calls 7B and/or 7C can be made *before* the terminating device users accept 6B and 6C the incoming call. This is advantageous because it reduces the overall delay until a connection between the devices A, B and C can be established. At the same time, no costs will result from the reply calls 7B or 7C if the associated device user rejects the incoming call, or does not accept it before the originating device A user hangs up. In fact, if no connection is established between the devices A, B and C, no costs will result on the originating side either. In other words, if all the terminating device users reject the incoming call, or none of them accepts the call before the originating device user hangs up, the subscription associated with the originating device A will not be charged for first call 2 to the bridge node 141. Namely, the first call 2 is answered only if at least one of the reply calls 7B and/or 7C reaches the bridge node 142 and/or 143. According to standard telecommunication billing routines, no charge is incurred for either party unless at least two parties arrive at a bridge node 141, 142 and/or 143 since it is only at this point in time that the call is answered.

The reply calls 7B and 7C are made over the PLMN, here represented by 132 and 133 respectively, using reply telephone numbers #2 and #3 respectively, which preferably are stored in the terminating devices B and C respectively, and may either be fixed or be selected dynamically, e.g. based on the respective locations of the terminating devices B and C. In the former case, the reply telephone numbers #2 and #3 can be default numbers, which could be the same as the first telephone number #1. In the latter case, however, the reply telephone numbers #2 and #3 are typically different from the first telephone number #1.

In response to the reply calls 7B and 7C, the bridge nodes 142 and 143 are configured to send a respective second bridge-acknowledge message 8B and 8C to the server node 110. Each second bridge-acknowledge message 8B and 8C specifies a second network address of the bridge node 142 and 143 respectively. In response to the first and second bridge-acknowledge messages 3A, 8B and 8C, the server node 110, in turn, is configured to send a respective bridge-prompting message 9A, 9B and 9C to each of the bridge nodes 141, 142 and 143 respectively. Thereafter, the interconnection of the originating device A and terminating devices B and C can be completed via first and second legs 11AB and 11AC respectively over the network 150 between the bridge nodes 141, 142 and 143.

Preferably, to economize the bridge-node resources, upon receipt of the bridge-prompting message 9B in the bridge node 142, the bridge node 142 is configured to cause 10B a direct connection between the originating device A and the terminating device B over the conference bridge 146 in the bridge node 141 and the PLMN 132, i.e. bypassing the bridge node 142. Analogously, upon receipt of the bridge-prompting message 9C in the bridge node 143, the bridge node 143 is configured to cause 10C a direct connection between the originating device A and the terminating device C over the conference bridge 146 in the bridge node 141 and the PLMN 133, i.e. bypassing the bridge node 143.

The server node 110 and the bridge nodes 141, 142 and 143 are preferably communicatively connected to at least one memory unit storing a computer program product, which, in turn, contains software for making at least one processor in the server node 110 and the bridge nodes 141, 142 and 143 execute the above-described actions together with the software-implemented call handling tools SWA, SWB and SWC when the computer program product is run on the at least one processor.

The database 115 may further store definitions of groups of subscribers, which groups are used for setting up calls to predefined clusters of subscribers or by other means handling calls that include such clusters of subscribers. Each of the subscribers in a group of subscribers is presumed to be associated with a particular device, for instance A, B or C. Thus, given that there is a group of subscribers associated with the devices A, B and C, the originating device may initiate a group call in respect of that group simply by selecting a corresponding icon in the software-implemented call handling tool SWA.

Of course, especially if there are many members of the group, there is a risk that only a sub-set of the members accept an incoming call within an interval for accept. Therefore, according to one preferred embodiment of the invention, if a connection 11AB has been established between the originating device A and at least one terminating device B of the terminating devices identified in the call-setup request 1, however no user's accept command has been received in at least one of the other terminating devices C identified in the call-setup request 1 within a response interval after having initiated the first type of alert signal 5C, the server node 110 is configured to send a call-in-progress notification to each such non-connected device C. In response to the call-in-progress notification, the software-implemented call handling tool SWC in the non-connected device C is configured to generate a second type of alert signal adapted to notify a user of an ongoing call to which the non-connected device C can be connected.

Further preferably, if a connection 11AC has been established between a set of devices, say A and C, associated with a sub-group of subscribers in a group of subscribers, the server node 110 is configured to send a call-in-progress notification to each non-connected device B that is associated with a subscriber of the group, however that is not included in the sub-group. In other words, also subscribers who were never actually called, but belong to a group in which some members are engaged in a call may be informed of an ongoing group call. In response to the call-in-progress notification, the software-implemented call handling tool SWB in each of the non-connected devices, here B, is configured to generate a second type of alert signal adapted to notify a user of an ongoing call to which the non-connected device B can be connected. In response to a received user command designating the ongoing call, in turn, the software-implemented call handling tool SWB in the non-connected device B is configured to make the reply call 7B to the second bridge node 142 over the public land mobile network 132 using the reply telephone number #2 as described above.

Additionally, after that a group call has been set up between the originating device A and the at least two terminating devices B and C, it is preferable if the software-implemented call handling tool SWA, SWB and SWC respectively is configured to implement further call-related services. For example, this may involve generating a call-setup request 1 in respect of at least one additional terminating device to be included in the group call in response to a call-setup command from a user. In other words, any user of the devices A, B and/or C can invite further participants to the group call during the course of the call.

Alternatively, or additionally, the software-implemented call handling tool SWA, SWB and SWC respectively may be configured to send a call-disconnect request in respect of at least one of the other devices A, B and/or C to the server node 110 in response to a call-disconnect command from a user. Upon receipt of such a request, the server node 110, in turn, is configured to cause a device specified in the call-disconnect request to be disconnected from the group call.

Alternatively, or additionally, the software-implemented call handling tool SWA, SWB and SWC respectively may be configured to send a mute request in respect of at least one of the other devices A, B and/or C to the server node 110 in response to a muting command from a user. Upon receipt of such a request, the server node 110, in turn, is configured to cause a temporary interruption in an exchange of acoustic data between a device specified in the mute request and the other devices of said devices.

As yet another alternative, the software-implemented call handling tool SWA, SWB and SWC respectively may be configured to send an on-hold request in respect of at least one of the other devices A, B and/or C to the server node 110 in response to an on-hold command from a user. Upon receipt of such a request, the server node 110, in turn, is configured to temporary disconnect any device specified in the on-hold request from all incoming and outgoing acoustic data that is exchanged between the other parties on the line. In other words, a sub-group within the group is placed on hold while the remaining participants have a private talk session.

The server node 110 and the bridge nodes 141, 142 and 143 are preferably communicatively connected to at least one memory unit storing a computer program product, which, in turn, contains software for making at least one processor in the server node 110 and the bridge nodes 141, 142 and 143 a execute the above-described actions together with the software-implemented call handling tools SWA and SWB when the computer program product is run on the at least one processor.

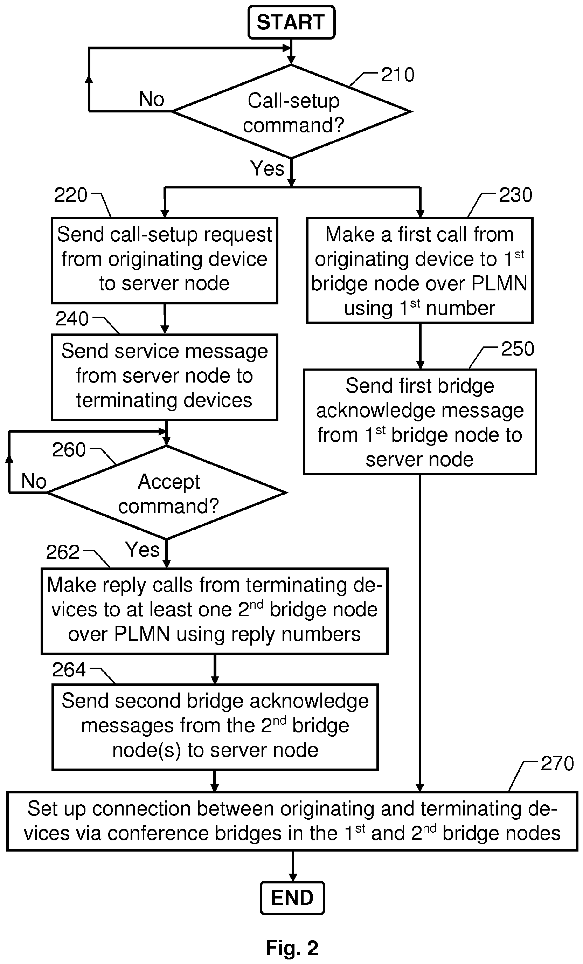

In order to sum up, and with reference to the flow diagram in Figure 2, we will now describe the general method according to the invention for setting up a group call between one originating device and at least two terminating devices, which each has access to a PLMN as well as to a mobile data network.

A first step 210, checks if a call-setup command has been received in the originating device; and if so, parallel steps 220 and 230 follow. Otherwise, the procedure loops back and stays in step 210.

In step 220, a call-setup request is sent from the originating device to the server node over a first mobile data network. In step 230, a first call is made over PLMN from the originating device to a first bridge node using a first telephone number.

A step 240, subsequent to step 220, involves sending a respective service message from the server node to the terminating devices. A step 250, following step 230, involves sending a first bridge acknowledge message from the first bridge to the server node over a data network, e.g. the Internet.

A step 260, succeeding step 240, checks if the incoming call has been accepted in a terminating device; and if so a step 262 follows. Otherwise, in respect of each terminating device from which no call accept has been received, the procedure loops back and stays in step 260 until a timer expires (i.e. the call remains unaccepted for a certain time).

In step 262, a reply call is made from each accepting terminating device to a second bridge node. Then, in a step 264, a second bridge acknowledge message is sent from each second bridge node to the server node over a data network, e.g. the Internet.

A step 270, which follows after parallel steps 264 and 270, sets up connections between the originating and terminating devices via conference bridges in the first and second bridge nodes. Thereafter, the call-setup procedure ends. However, the group call, as such, is active until at least two of the devices involved remain connected.

All of the process steps, as well as any sub-sequence of steps, described with reference to Figure 2 above may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims. The scope of protection of the invention is defined by the appended claims.

## Claims

1. A system for setting up a group call between one originating device (A) and at least two terminating devices (B, C), the originating and terminating devices (A; B, C) each having access both to a public land mobile network (131, 132, 133) and a mobile data network (121, 122, 133), the originating and terminating devices (A; B, C) including a respective software-implemented call handling tool (SWA; SWB, SWC) configured to assist a user in the process of placing and receiving group calls, the system comprising:
a server node (110) connected to the mobile data network (121, 122, 123), and
at least one bridge node (141, 142, 143) connected to the server node (110), the mobile data network (121, 122, 123) and the public land mobile network (131, 132, 133),
the server node (110) being configured to:
receive a call-setup request (1) from the originating device (A), the call-setup request (1) being generated by the software-implemented call handling tool (SWA) in the originating device (A) in response to a call-setup command from a user of the originating device (A), the call-setup request (1) indicating a respective identity of the at least two terminating devices (B, C), and
based on the call-setup request (1), set up a group call between the originating device (A) and the at least two terminating devices (B, C) over at least one conference bridge (146, 147, 148) in the at least one bridge node (141, 142, 143),
wherein, in response to the call-setup command, the software-implemented call handling tool (SWA) in the originating device (A) is further configured to make a first call (2) to a first bridge node (141) of the at least one bridge node over the public land mobile network (131) using a first telephone number (#1) stored in the originating device (A),
wherein, in response to the call-setup request (1), the server node (110) is configured to send a respective service message (4B, 4C) to each of the at least two terminating devices (B, C), the service messages (4B, 4C) indicating an identity of the originating device (A) and a petition to establish a voice connection with the at least two terminating devices (B, C),
wherein, in response to the service messages (4B, 4C), the software-implemented call handling tool (SWB, SWC) in each of the at least two terminating devices (B, C) is configured to generate a first type of alert signal (5B, 5C) adapted to notify a user of an incoming group call from the originating device (A),
wherein, after having initiated the first type of alert signal (5B, 5C), the software-implemented call handling tool (SWB, SWC) in each of the at least two terminating devices (B, C) is configured to make a reply call (7B, 7C) to at least one second bridge node (142; 143) of the at least one bridge node in response to a respective user's accept command (6B, 6C), the reply calls (7B, 7C) being made over the public land mobile network (132, 133) using a respective reply telephone number (#2, #3),
wherein, in response to the reply call (7B, 7C), the at least one second bridge node (142, 143) is configured to send a second bridge-acknowledge message (8B; 8C) to the server node (110), the second bridge-acknowledge message (8B; 8C) specifying a second network address of the second bridge node (142, 143); and
in response to the first and second bridge-acknowledge messages (3A; 8B, 8C), the server node (110) is configured to send a respective bridge-prompting message (9A, 9B, 9C) to the first and second bridge nodes (141, 142, 143).
wherein, in response to the bridge-prompting messages (9A, 9B, 9C), the first and second bridge nodes (141, 142, 143) are configured to cause (10A, 10B, 10C) connections (11AB, 11AC) between the originating device (A) and the at least two terminating device (B, C) over the at least one conference bridge (146, 147, 148).
**characterized in that** if:
a connection (11AB) has been established between the originating device (A) and at least one first device (B) of the at least two terminating devices, and
no user's accept command has been received in at least one non-connected device (C) of the at least two terminating devices within a response interval after having initiated the first type of alert signal (5C),
the server node (110) is configured to send a call-in-progress notification to the at least one non-connected device (C), and
in response thereto, the software-implemented call handling tool (SWC) in the at least one non-connected device (C) is configured to generate a second type of alert signal adapted to notify a user of an ongoing call to which the at least one non-connected device (C) can be connected.

2. The system according to claim 1, wherein the software-implemented call handling tool (SWA) in the originating device (A) is configured to select the first telephone number (#1) based on a location of the originating device (A).

3. The system according to any one of the preceding claims, wherein, in response to the first call (2), the first bridge node (141) is configured to send a first bridge-acknowledge message (3A) to the server node (110), the first bridge-acknowledge message (3A) specifying a first network address of the first bridge node (141).

4. The system according to claim 1, wherein the software-implemented call handling tool (SWB, SWC) in each of the terminating devices (B, C) is configured to select the reply telephone number (#2, #3) based on a respective location of the terminating device (B, C).

5. The system according to any one of claims 1 or 4, wherein the reply telephone number (#2, #3) is stored in the terminating device (B, C).

6. The system according to claim 1, wherein a definition of a group of subscribers is stored in a database (115) accessible by the server node (110), each of the subscribers in the group of subscribers being associated with a particular device (A, B, C), and if a connection (11AC) has been established between a set of devices (A, C) associated with a sub-group of subscribers in the group of subscribers,
the server node (110) is configured to send a call-in-progress notification to each non-connected device (B) that is associated with a subscriber of the group however that is not included in the sub-group, and in response thereto
the software-implemented call handling tool (SWB) in each of the non-connected devices (B) is configured to generate a second type of alert signal adapted to notify a user of an ongoing call to which the non-connected device (B) can be connected.

7. The system according to any one of claims 1 or 6, wherein in response to a received user command designating the ongoing call, the software-implemented call handling tool (SWC; SWB) in the non-connected device (C; B) is configured to make the reply call (7C; 7B) to the second bridge node (143; 142) of the at least one bridge node over the public land mobile network (133; 132) using the reply telephone number (#3; #2).

8. The system according to any one of the preceding claims, wherein after that a group call has been set up between the originating device (A) and the at least two terminating devices (B, C), the software-implemented call handling tool (SWA, SWB, SWC) in each of said devices is configured to:
generate the call-setup request (1) in respect of at least one additional terminating device to be included in the group call in response to a call-setup command from a user,
send a call-disconnect request in respect of at least one of said devices (A, B, C) to the server node (110) in response to a call-disconnect command from a user, the server node (110) being configured to cause a device specified in the call-disconnect request to be disconnected from the group call, or
send a mute request in respect of at least one of said devices (A, B, C) to the server node (110) in response to a muting command from a user, the server node (110) being configured to cause a temporary interruption in an exchange of acoustic data between a device specified in the mute request and the other devices of said devices.

9. A method of setting up a group call between one originating device (A) and at least two terminating devices (B, C), the originating and terminating devices (A; B, C) each having access both to a public land mobile network (131, 132, 133) and a mobile data network (121, 122, 133), the originating and terminating devices (A; B, C) including a respective software-implemented call handling tool (SWA; SWB, SWC) configured to assist a user in the process of placing and receiving group calls, the system comprising: a server node (110) connected to the mobile data network (121, 122, 123), and at least one bridge node (141, 142, 143) connected to the server node (110), the mobile data network (121, 122, 123) and the public land mobile network (131, 132, 133), the method comprising:
receiving in the server node (110) a call-setup request (1) from the originating device (A), the call-setup request (1) being generated by the software-implemented call handling tool (SWA) in the originating device (A) in response to a call-setup command from a user of the originating device (A), the call-setup request (1) indicating a respective identity of the at least two terminating devices (B, C), and
based on the call-setup request (1), setting up a group call between the originating device (A) and the at least two terminating devices (B, C) over at least one conference bridge (146, 147, 148) in the at least one bridge node (141, 142, 143), and
making, via the software-implemented call handling tool (SWA) in the originating device (A), a first call (1) to a first bridge node (141) of the at least one bridge node over the public land mobile network (131) using a first telephone number (#1) stored in the originating device (A) in response to the call-setup command.
sending from the server node (110), in response to the call-setup request (1), a respective service message (4B, 4C) to each of the at least one terminating device (B, C), the service messages (4B, 4C) indicating an identity of the originating device (A) and a petition to establish a voice connection with the at least two terminating devices (B, C).
generating in the software-implemented call handling tool (SWB; SWC) in each of the at least two terminating devices (B, C) in response to the service messages (4B, 4C), a first type of alert signal (5B, 5C) adapted to notify a user of the at least one terminating device (B) of an incoming group call from the originating device (A), wherein, after having initiated the first type of alert signal (5B, 5C), the method comprises:
making, via the software-implemented call handling tool (SWB; SWC) in each of the at least two terminating devices (B, C), a reply call (7B, 7C) to at least one second bridge node (142, 143) of the at least one bridge node in response to a user's accept command (6B, 6C), the reply call (7B, 7C) being made over the public land mobile network (132, 133) using a respective reply telephone number (#2, #3),
sending, in response to the reply call (7B, 7C), a second bridge-acknowledge message (8B; 8C) from the second bridge node (142, 143) to the server node (110), the second bridge-acknowledge message (8B; 8C) specifying a second network address of the second bridge node (142, 143); and
sending, in response to the first and second bridge-acknowledge messages (3A; 8B; 8C), a respective bridge-prompting message (9A; 9B, 9C) to the first and second bridge nodes (141; 142, 143), the method further comprising:
causing (10A; 10B, 10C), in response to the bridge-prompting messages (9A; 9B, 9C), the first and second bridge nodes (141; 142, 143) connections (11AB, 11AC) between the originating device (A) and the at least one terminating device (B, C) over the at least conference bridge (146, 147, 148),
wherein if a user command is received in the at least one second device (C) which user command designates the ongoing call, the method further comprises:
making, via the software-implemented call handling tool (SWC) in the at least one second device (C), the reply call (7C) to the second bridge node (143) of the at least one bridge node over the public land mobile network (133) using the reply telephone number (#3),
**characterized by** if:
a connection (11AB) has been established between the originating device (A) and at least one first device (B) of the at least two terminating devices, and
no user's accept command has been received in at least one non-connected device (C) of the at least two terminating devices within a response interval after having initiated the first type of alert signal (5C), the method further comprising:
sending from the server node (110) a call-in-progress notification to the at least one non-connected device (C), and
in response thereto, generating in the software-implemented call handling tool (SWC) in the at least one non-connected device (C), a second type of alert signal adapted to notify a user of an ongoing call to which the at least one non-connected device (C) can be connected.

10. The method according to claim 9, comprising:
selecting, via the software-implemented call handling tool (SWA) in the originating device (A), the first telephone number (#1) based on a location of the originating device (A).

11. The method according to any one of claims 9 or 10, comprising:
sending, in response to the first call (2), a first bridge-acknowledge message (3A) from the first bridge node (141) to the server node (110), the first bridge-acknowledge message (3A) specifying a first network address of the first bridge node (141).

12. The method according to claim 9, comprising:
selecting, via the software-implemented call handling tool (SWB, SWB) in each of the terminating devices (B, C), the reply telephone number (#2, #3) based on a respective location of the terminating device (B, C).

13. The method according to any one of claims 9 or 12, wherein the reply telephone number (#2, #3) is stored in the terminating device (B, C).

14. The method according to claim 9, wherein a definition of a group of subscribers is stored in a database (115) accessible by the server node (110), each of the subscribers in the group of subscribers being associated with a particular device (A, B, C), and if a connection (11AC) has been established between a set of devices (A, C) associated with a sub-group of subscribers in the group of subscribers, the method further comprising:
sending, from the server node (110), a call-in-progress notification to each non-connected device (B) that is associated with a subscriber of the group however that is not included in the sub-group, and in response thereto
generating, in the software-implemented call handling tool (SWB) in each of the non-connected devices (B), a second type of alert signal adapted to notify a user of an ongoing call to which the non-connected device (B) can be connected.

15. The method according to any one of claims 9 or 14, wherein in response to a received user command designating the ongoing call, the method comprising:
making, via the software-implemented call handling tool (SWC; SWB) in the non-connected device (C; B), the reply call (7C; 7B) to the second bridge node (143; 142) of the at least one bridge node over the public land mobile network (133; 132) using the reply telephone number (#3; #2).

16. The method according to any one of the claims 9 to 15, wherein after that a group call has been set up between the originating device (A) and the at least two terminating devices (B, C), the method comprises:
generating the call-setup request (1) in respect of at least one additional terminating device to be included in the group call in response to a call-setup command from a user,
sending a call-disconnect request in respect of at least one of said devices (A, B, C) to the server node (110) in response to a call-disconnect command from a user, the server node (110) being configured to cause a device specified in the call-disconnect request to be disconnected from the group call, or
sending a mute request in respect of at least one of said devices (A, B, C) to the server node (110) in response to a muting command from a user, the server node (110) being configured to cause a temporary interruption in an exchange of acoustic data between a device specified in the mute request and the other devices of said devices

17. A computer program product loadable into the memory of at least one processor, comprising software for executing the method of any of the claims 9 to 16 when said computer program product is run on the at least one processor.

18. A processor-readable medium comprising instructions which, when executed by at least one processor, cause the at least one processor to perform a method according to any one of claims 9 to 16.

## Patentansprüche

1. System zum Aufbau eines Gruppenrufes zwischen einem anrufenden Gerät (A) und mindestens zwei angerufenen Geräten (B, C), wobei die anrufenden und angerufenen Geräte (A; B, C) jeweils Zugang sowohl zu einem öffentlichen terrestrischen Mobilfunknetz (131, 132, 133) als auch einem mobilen Datennetz (121, 122, 133) haben, wobei die anrufenden und angerufenen Geräte (A; B, C) ein jeweiliges Software-implementiertes Rufverarbeitungs-Tool (SWA; SWB, SWC) einschließen, das so konfiguriert ist, dass es einen Benutzer in dem Prozess des Tätigens und Empfangens von Gruppenrufen unterstützt, wobei das System umfasst:
einen Server-Knoten (110), der mit dem mobilen Datennetz (121, 122, 123) verbunden ist, und
mindestens einen Brückenknoten (141, 142, 143), der mit dem Server-Knoten (110), dem mobilen Datennetz (121, 122, 123) und dem öffentlichen terrestrischen Mobilfunknetz (131, 132, 133) verbunden ist, wobei der Server-Knoten (110) so konfiguriert ist, dass er:
eine Rufaufbauanforderung (1) aus dem anrufenden Gerät (A) empfängt, wobei durch das Software-implementierte Rufverarbeitungs-Tool (SWA) in dem anrufenden Gerät (A) die Rufaufbauanforderung (1) als Antwort auf einen Rufaufbaubefehl eines Benutzers des anrufenden Gerätes (A) erzeugt wird, wobei die Rufaufbauanforderung (1) eine jeweilige Identität der mindestens zwei angerufenen Geräte (B, C) angibt, und
auf der Grundlage der Rufaufbauanforderung (1) einen Gruppenruf zwischen dem anrufenden Gerät (A) und den mindestens zwei angerufenen Geräten (B, C) über mindestens eine Konferenzbrücke (146, 147, 148) in dem mindestens einen Brückenknoten (141, 142, 143) aufbaut,
wobei, als Antwort auf den Rufaufbaubefehl, das Software-implementierte Rufverarbeitungs-Tool (SWA) in dem anrufenden Gerät (A) ferner so konfiguriert ist, dass es einen ersten Ruf (2) zu einem ersten Brückenknoten (141) des mindestens einen Brückenknotens über das öffentliche terrestrische Mobilfunknetz (131) unter Verwendung einer ersten Telefonnummer (#1), die in dem anrufenden Gerät (A) gespeichert ist, tätigt,
wobei, als Antwort auf die Rufaufbauanforderung (1), der Server-Knoten (110) so konfiguriert ist, dass er eine jeweilige Dienstnachricht (4B, 4C) an jedes der mindestens zwei angerufenen Geräte (B, C) sendet, wobei die Dienstnachrichten (4B, 4C) eine Identität des anrufenden Gerätes (A) und einen Antrag auf Herstellung einer Sprachverbindung mit den mindestens zwei angerufenen Geräten (B, C) angeben,
wobei, als Antwort auf die Dienstnachrichten (4B, 4C), das Software-implementierte Rufverarbeitungs-Tool (SWB, SWC) in jedem der mindestens zwei angerufenen Geräte (B, C) so konfiguriert ist, dass es eine erste Alarmsignalart (5B, 5C) erzeugt, die so angepasst ist, dass sie einem Benutzer einen ankommenden Gruppenruf aus dem anrufenden Gerät (A) meldet,
wobei, nachdem die erste Alarmsignalart (5B, 5C) initiiert worden ist, das Software-implementierte Rufverarbeitungs-Tool (SWB, SWC) in jedem der mindestens zwei angerufenen Geräte (B, C) so konfiguriert ist, dass es einen Antwortruf (7B, 7C) zu mindestens einem zweiten Brückenknoten (142; 143) des mindestens einen Brückenknotens als Antwort auf einen jeweiligen Annahmebefehl (6B, 6C) eines Benutzers tätigt, wobei die Antwortrufe (7B, 7C) über das öffentliche terrestrische Mobilfunknetz (132, 133) unter Verwendung einer jeweiligen Antworttelefonnummer (#2, #3) getätigt werden,
wobei, als Antwort auf den Antwortruf (7B, 7C), der mindestens eine zweite Brückenknoten (142, 143) so konfiguriert ist, dass er eine zweite Brückenbestätigungsnachricht (8B; 8C) an den Server-Knoten (110) sendet, wobei die zweite Brückenbestätigungsnachricht (8B; 8C) eine zweite Netzadresse des zweiten Brückenknotens (142, 143) spezifiziert; und,
als Antwort auf die ersten und zweiten Brückenbestätigungsnachrichten (3A; 8B, 8C), der Server-Knoten (110) so konfiguriert ist, dass er eine jeweilige Brückenaufforderungsnachricht (9A, 9B, 9C) an die ersten und zweiten Brückenknoten (141, 142, 143) sendet,
wobei, als Antwort auf die Brückenaufforderungsnachrichten (9A, 9B, 9C), die ersten und zweiten Brückenknoten (141, 142, 143) so konfiguriert sind, dass sie Verbindungen (11AB, 11AC) zwischen dem anrufenden Gerät (A) und den mindestens zwei angerufenen Geräten (B, C) über die mindestens eine Konferenzbrücke (146, 147, 148) bewirken (10A, 10B, 10C),
**dadurch gekennzeichnet, dass,** falls:
eine Verbindung (11AB) zwischen dem anrufenden Gerät (A) und mindestens einem ersten Gerät (B) der mindestens zwei angerufenen Geräte hergestellt worden ist und
kein Annahmebefehl eines Benutzers in mindestens einem nicht verbundenen Gerät (C) der mindestens zwei angerufenen Geräte innerhalb eines Antwortintervalls nach dem Initiieren der ersten Alarmsignalart (5C) empfangen worden ist,
der Server-Knoten (110) so konfiguriert ist, dass er eine Meldung "Laufendes Gespräch" an das mindestens eine nicht verbundene Gerät (C) sendet, und,
als Antwort darauf, das Software-implementierte Rufverarbeitungs-Tool (SWC) in dem mindestens einen nicht verbundenen Gerät (C) so konfiguriert ist, dass es eine zweite Alarmsignalart erzeugt, die so angepasst ist, dass sie einem Benutzer einen andauernden Ruf, mit dem das mindestens eine nicht verbundene Gerät (C) verbunden werden kann, meldet.

2. System nach Anspruch 1, wobei das Software-implementierte Rufverarbeitungs-Tool (SWA) in dem anrufenden Gerät (A) so konfiguriert ist, dass es die erste Telefonnummer (#1) auf der Grundlage eines Ortes des anrufenden Gerätes (A) auswählt.

3. System nach einem der vorangehenden Ansprüche, wobei, als Antwort auf den ersten Ruf (2), der erste Brückenknoten (141) so konfiguriert ist, dass er eine erste Brückenbestätigungsnachricht (3A) an den Server-Knoten (110) sendet, wobei die erste Brückenbestätigungsnachricht (3A) eine erste Netzadresse des ersten Brückenknotens (141) spezifiziert.

4. System nach Anspruch 1, wobei das Software-implementierte Rufverarbeitungs-Tool (SWB, SWC) in jedem der angerufenen Geräte (B, C) so konfiguriert ist, dass es die Antworttelefonnummer (#2, #3) auf der Grundlage eines jeweiligen Ortes des angerufenen Gerätes (B, C) auswählt.

5. System nach einem der Ansprüche 1 oder 4, wobei die Antworttelefonnummer (#2, #3) in dem angerufenen Gerät (B, C) gespeichert ist.

6. System nach Anspruch 1, wobei in einer für den Server-Knoten (110) zugänglichen Datenbank (115) eine Bestimmung einer Gruppe von Teilnehmern gespeichert ist, wobei jeder der Teilnehmer in der Gruppe von Teilnehmern mit einem bestimmten Gerät (A, B, C) verknüpft ist, und, falls eine Verbindung (11AC) zwischen einer Menge von Geräten (A, C), die mit einer Untergruppe von Teilnehmern in der Gruppe von Teilnehmern verknüpft ist, hergestellt worden ist, der Server-Knoten (110) so konfiguriert ist, dass er eine Meldung "Laufendes Gespräch" sendet an jedes nicht verbundene Gerät (B), das mit einem Teilnehmer der Gruppe verknüpft ist, der jedoch nicht in der Untergruppe enthalten ist, und, als Antwort darauf,
das Software-implementierte Rufverarbeitungs-Tool (SWB) in jedem der nicht verbundenen Geräte (B) so konfiguriert ist, dass es eine zweite Alarmsignalart erzeugt, die so angepasst ist, dass sie einem Benutzer einen andauernden Ruf, mit dem das nicht verbundene Gerät (B) verbunden werden kann, meldet.

7. System nach einem der Ansprüche 1 oder 6, wobei, als Antwort auf einen empfangenen Benutzerbefehl, der den andauernden Ruf bezeichnet, das Software-implementierte Rufverarbeitungs-Tool (SWC; SWB) in dem nicht verbundenen Gerät (C; B) so konfiguriert ist, dass es den Antwortruf (7C; 7B) zu dem zweiten Brückenknoten (143; 142) des mindestens einen Brückenknotens über das öffentliche terrestrische Mobilfunknetz (133; 132) unter Verwendung der Antworttelefonnummer (#3; #2) tätigt.

8. System nach einem der vorangehenden Ansprüche, wobei, nachdem ein Gruppenruf zwischen dem anrufenden Gerät (A) und den mindestens zwei angerufenen Geräten (B, C) aufgebaut worden ist, das Software-implementierte Rufverarbeitungs-Tool (SWA, SWB, SWC) in jedem der Geräte so konfiguriert ist, dass es:
die Rufaufbauanforderung (1) bezüglich mindestens eines zusätzlichen angerufenen Gerätes, das in den Gruppenruf einzuschließen ist, als Antwort auf einen Rufaufbaubefehl eines Benutzers erzeugt,
als Antwort auf einen Ruftrennungsbefehl eines Benutzers eine Ruftrennungsanforderung bezüglich mindestens eines der Geräte (A, B, C) an den Server-Knoten (110) sendet, wobei der Server-Knoten (110) so konfiguriert ist, dass er bewirkt, dass ein Gerät, das in der Ruftrennungsanforderung spezifiziert ist, von dem Gruppenruf getrennt wird, oder
als Antwort auf einen Stummschaltbefehl eines Benutzers eine Stummschaltanforderung bezüglich mindestens eines der Geräte (A, B, C) an den Server-Knoten (110) sendet, wobei der Server-Knoten (110) so konfiguriert ist, dass er eine temporäre Unterbrechung in einem Austausch von akustischen Daten zwischen einem Gerät, das in der Stummschaltanforderung spezifiziert ist, und den anderen Geräten der Geräte bewirkt.

9. Verfahren zum Aufbau eines Gruppenrufes zwischen einem anrufenden Gerät (A) und mindestens zwei angerufenen Geräten (B, C), wobei die anrufenden und angerufenen Geräte (A; B, C) jeweils Zugang sowohl zu einem öffentlichen terrestrischen Mobilfunknetz (131, 132, 133) als auch einem mobilen Datennetz (121, 122, 133) haben, wobei die anrufenden und angerufenen Geräte (A; B, C) ein jeweiliges Software-implementiertes Rufverarbeitungs-Tool (SWA; SWB, SWC) einschließen, das so konfiguriert ist, dass es einen Benutzer in dem Prozess des Tätigens und Empfangens von Gruppenrufen unterstützt, wobei das System umfasst: einen Server-Knoten (110), der mit dem mobilen Datennetz (121, 122, 123) verbunden ist, und mindestens einen Brückenknoten (141, 142, 143), der mit dem Server-Knoten (110), dem mobilen Datennetz (121, 122, 123) und dem öffentlichen terrestrischen Mobilfunknetz (131, 132, 133) verbunden ist, wobei das Verfahren umfasst:
Empfangen, in dem Server-Knoten (110), einer Rufaufbauanforderung (1) aus dem anrufenden Gerät (A), wobei durch das Software-implementierte Rufverarbeitungs-Tool (SWA) in dem anrufenden Gerät (A) die Rufaufbauanforderung (1) als Antwort auf einen Rufaufbaubefehl eines Benutzers des anrufenden Gerätes (A) erzeugt wird, wobei die Rufaufbauanforderung (1) eine jeweilige Identität der mindestens zwei angerufenen Geräte (B, C) angibt, und,
auf der Grundlage der Rufaufbauanforderung (1), Aufbauen eines Gruppenrufes zwischen dem anrufenden Gerät (A) und den mindestens zwei angerufenen Geräten (B, C) über mindestens eine Konferenzbrücke (146, 147, 148) in dem mindestens einen Brückenknoten (141, 142, 143) und
Tätigen, über das Software-implementierte Rufverarbeitungs-Tool (SWA) in dem anrufenden Gerät (A), eines ersten Rufes (1) zu einem ersten Brückenknoten (141) des mindestens einen Brückenknotens über das öffentliche terrestrische Mobilfunknetz (131) unter Verwendung einer ersten Telefonnummer (#1), die in dem anrufenden Gerät (A) gespeichert ist, als Antwort auf den Rufaufbaubefehl,
Senden, aus dem Server-Knoten (110), als Antwort auf die Rufaufbauanforderung (1), einer jeweiligen Dienstnachricht (4B, 4C) an jedes des mindestens einen angerufenen Gerätes (B, C), wobei die Dienstnachrichten (4B, 4C) eine Identität des anrufenden Gerätes (A) und einen Antrag auf Herstellung einer Sprachverbindung mit den mindestens zwei angerufenen Geräten (B, C) angeben,
Erzeugen, in dem Software-implementierten Rufverarbeitungs-Tool (SWB; SWC) in jedem der mindestens zwei angerufenen Geräte (B, C), als Antwort auf die Dienstnachrichten (4B, 4C), einer ersten Alarmsignalart (5B, 5C), die so angepasst ist, dass sie einem Benutzer des mindestens einen angerufenen Gerätes (B) einen ankommenden Gruppenruf aus dem anrufenden Gerät (A) meldet, wobei, nachdem die erste Alarmsignalart (5B, 5C) initiiert worden ist, das Verfahren umfasst:
Tätigen, über das Software-implementierte Rufverarbeitungs-Tool (SWB; SWC) in jedem der mindestens zwei angerufenen Geräte (B, C), eines Antwortrufes (7B, 7C) zu mindestens einem zweiten Brückenknoten (142, 143) des mindestens einen Brückenknotens als Antwort auf einen Annahmebefehl (6B, 6C) eines Benutzers, wobei der Antwortruf (7B, 7C) über das öffentliche terrestrische Mobilfunknetz (132, 133) unter Verwendung einer jeweiligen Antworttelefonnummer (#2, #3) getätigt wird,
Senden, als Antwort auf den Antwortruf (7B, 7C), einer zweiten Brückenbestätigungsnachricht (8B; 8C) aus dem zweiten Brückenknoten (142, 143) an den Server-Knoten (110), wobei die zweite Brückenbestätigungsnachricht (8B; 8C) eine zweite Netzadresse des zweiten Brückenknotens (142, 143) spezifiziert; und
Senden, als Antwort auf die ersten und zweiten Brückenbestätigungsnachrichten (3A; 8B; 8C), einer jeweiligen Brückenaufforderungsnachricht (9A; 9B, 9C) an die ersten und zweiten Brückenknoten (141; 142, 143), wobei das Verfahren ferner umfasst:
Bewirken (10A; 10B, 10C), als Antwort auf die Brückenaufforderungsnachrichten (9A; 9B, 9C), durch die ersten und zweiten Brückenknoten (141; 142, 143), von Verbindungen (11AB, 11AC) zwischen dem anrufenden Gerät (A) und dem mindestens einen angerufenen Gerät (B, C) über die mindestens eine Konferenzbrücke (146, 147, 148),
wobei, falls ein Benutzerbefehl, der den andauernden Ruf bezeichnet, in dem mindestens einen zweiten Gerät (C) empfangen wird, das Verfahren ferner umfasst:
Tätigen, über das Software-implementierte Rufverarbeitungs-Tool (SWC) in dem mindestens einen zweiten Gerät (C), des Antwortrufes (7C) zu dem zweiten Brückenknoten (143) des mindestens einen Brückenknotens über das öffentliche terrestrische Mobilfunknetz (133) unter Verwendung der Antworttelefonnummer (#3),
**gekennzeichnet durch,** falls:
eine Verbindung (11AB) zwischen dem anrufenden Gerät (A) und mindestens einem ersten Gerät (B) der mindestens zwei angerufenen Geräte hergestellt worden ist und
kein Annahmebefehl eines Benutzers in mindestens einem nicht verbundenen Gerät (C) der mindestens zwei angerufenen Geräte innerhalb eines Antwortintervalls nach dem Initiieren der ersten Alarmsignalart (5C) empfangen worden ist, das Verfahren ferner umfasst:
Senden, aus dem Server-Knoten (110), einer Meldung "Laufendes Gespräch" an das mindestens eine nicht verbundene Gerät (C) und,
als Antwort darauf, Erzeugen, in dem Software-implementierten Rufverarbeitungs-Tool (SWC) in dem mindestens einen nicht verbundenen Gerät (C), einer zweiten Alarmsignalart, die so angepasst ist, dass sie einem Benutzer einen andauernden Ruf, mit dem das mindestens eine nicht verbundene Gerät (C) verbunden werden kann, meldet.

10. Verfahren nach Anspruch 9, umfassend:
Auswählen, über das Software-implementierte Rufverarbeitungs-Tool (SWA) in dem anrufenden Gerät (A), der ersten Telefonnummer (#1) auf der Grundlage eines Ortes des anrufenden Gerätes (A).

11. Verfahren nach einem der Ansprüche 9 oder 10, umfassend:
Senden, als Antwort auf den ersten Ruf (2), einer ersten Brückenbestätigungsnachricht (3A) aus dem ersten Brückenknoten (141) an den Server-Knoten (110), wobei die erste Brückenbestätigungsnachricht (3A) eine erste Netzadresse des ersten Brückenknotens (141) spezifiziert.

12. Verfahren nach Anspruch 9, umfassend:
Auswählen, über das Software-implementierte Rufverarbeitungs-Tool (SWB, SWB) in jedem der angerufenen Geräte (B, C), der Antworttelefonnummer (#2, #3) auf der Grundlage eines jeweiligen Ortes des angerufenen Gerätes (B, C).

13. Verfahren nach einem der Ansprüche 9 oder 12, wobei die Antworttelefonnummer (#2, #3) in dem angerufenen Gerät (B, C) gespeichert wird.

14. Verfahren nach Anspruch 9, wobei in einer für den Server-Knoten (110) zugänglichen Datenbank (115) eine Bestimmung einer Gruppe von Teilnehmern gespeichert wird, wobei jeder der Teilnehmer in der Gruppe von Teilnehmern mit einem bestimmten Gerät (A, B, C) verknüpft wird, und, falls eine Verbindung (11AC) zwischen einer Menge von Geräten (A, C), die mit einer Untergruppe von Teilnehmern in der Gruppe von Teilnehmern verknüpft ist, hergestellt worden ist, das Verfahren ferner umfasst:
Senden, aus dem Server-Knoten (110), einer Meldung "Laufendes Gespräch" an jedes nicht verbundene Gerät (B), das mit einem Teilnehmer der Gruppe verknüpft ist, der jedoch nicht in der Untergruppe enthalten ist, und, als Antwort darauf,
Erzeugen, in dem Software-implementierten Rufverarbeitungs-Tool (SWB) in jedem der nicht verbundenen Geräte (B), einer zweiten Alarmsignalart, die so angepasst ist, dass sie einem Benutzer einen andauernden Ruf, mit dem das nicht verbundene Gerät (B) verbunden werden kann, meldet.

15. Verfahren nach einem der Ansprüche 9 oder 14, wobei, als Antwort auf einen empfangenen Benutzerbefehl, der den andauernden Ruf bezeichnet, das Verfahren umfasst:
Tätigen, über das Software-implementierte Rufverarbeitungs-Tool (SWC; SWB) in dem nicht verbundenen Gerät (C; B), des Antwortrufes (7C; 7B) zu dem zweiten Brückenknoten (143; 142) des mindestens einen Brückenknotens über das öffentliche terrestrische Mobilfunknetz (133; 132) unter Verwendung der Antworttelefonnummer (#3; #2).

16. Verfahren nach einem der Ansprüche 9 bis 15, wobei, nachdem ein Gruppenruf zwischen dem anrufenden Gerät (A) und den mindestens zwei angerufenen Geräten (B, C) aufgebaut worden ist, das Verfahren umfasst:
Erzeugen der Rufaufbauanforderung (1) bezüglich mindestens eines zusätzlichen angerufenen Gerätes, das in den Gruppenruf einzuschließen ist, als Antwort auf einen Rufaufbaubefehl eines Benutzers,
Senden, als Antwort auf einen Ruftrennungsbefehl eines Benutzers, einer Ruftrennungsanforderung bezüglich mindestens eines der Geräte (A, B, C) an den Server-Knoten (110), wobei der Server-Knoten (110) so konfiguriert ist, dass er bewirkt, dass ein Gerät, das in der Ruftrennungsanforderung spezifiziert ist, von dem Gruppenruf getrennt wird, oder
Senden einer Stummschaltanforderung bezüglich mindestens eines der Geräte (A, B, C) an den Server-Knoten (110) als Antwort auf einen Stummschaltbefehl eines Benutzers, wobei der Server-Knoten (110) so konfiguriert ist, dass er eine temporäre Unterbrechung in einem Austausch von akustischen Daten zwischen einem Gerät, das in der Stummschaltanforderung spezifiziert ist, und den anderen Geräten der Geräte bewirkt.

17. Computerprogrammprodukt, das in den Speicher mindestens eines Prozessors ladbar ist, umfassend Software zum Ausführen des Verfahrens nach einem der Ansprüche 9 bis 16, wenn das Computerprogrammprodukt auf dem mindestens einen Prozessor laufen gelassen wird.

18. Prozessorlesbarer Datenträger, umfassend Befehle, die, wenn sie durch mindestens einen Prozessor ausgeführt werden, bewirken, dass der mindestens eine Prozessor ein Verfahren nach einem der Ansprüche 9 bis 16 durchführt.

## Revendications

1. Système destiné à établir un appel de groupe entre un dispositif d'origine (A) et au moins deux dispositifs de terminaison (B, C), les dispositifs d'origine et de terminaison (A ; B, C) ayant chacun accès à la fois à un réseau mobile terrestre public (131, 132, 133) et à un réseau de données mobile (121, 122, 123), les dispositifs d'origine et de terminaison (A ; B, C) incluant un outil respectif de gestion d'appels mis en œuvre par logiciel (SWA ; SWB, SWC) configuré de manière à assister un utilisateur dans le cadre d'un processus d'émission et de réception d'appels de groupe, le système comportant :
un nœud de serveur (110) connecté au réseau de données mobile (121, 122, 123) ; et
au moins un nœud de pont (141, 142, 143) connecté au nœud de serveur (110), au réseau de données mobile (121, 122, 123) et au réseau mobile terrestre public (131, 132, 133), le nœud de serveur (110) étant configuré de manière à :
recevoir une demande d'établissement d'appel (1) en provenance du dispositif d'origine (A), la demande d'établissement d'appel (1) étant générée par l'outil de gestion d'appels mis en œuvre par logiciel (SWA) dans le dispositif d'origine (A), en réponse à une instruction d'établissement d'appel en provenance d'un utilisateur du dispositif d'origine (A), la demande d'établissement d'appel (1) indiquant une identité respective desdits au moins deux dispositifs de terminaison (B, C) ; et
sur la base de la demande d'établissement d'appel (1), établir un appel de groupe entre le dispositif d'origine (A) et lesdits au moins deux dispositifs de terminaison (B, C) sur au moins un pont de conférence (146, 147, 148) dans ledit au moins un nœud de pont (141, 142, 143) ;
dans lequel, en réponse à l'instruction d'établissement d'appel, l'outil de gestion d'appels mis en œuvre par logiciel (SWA) dans le dispositif d'origine (A) est en outre configuré de manière à effectuer un premier appel (2) vers un premier nœud de pont (141) dudit au moins un nœud de pont sur le réseau mobile terrestre public (131) en utilisant un premier numéro de téléphone (#1) stocké dans le dispositif d'origine (A) ;
dans lequel, en réponse à la demande d'établissement d'appel (1), le nœud de serveur (110) est configuré de manière à envoyer un message de service respectif (4B, 4C) à chacun desdits au moins deux dispositifs de terminaison (B, C), les messages de service (4B, 4C) indiquant une identité du dispositif d'origine (A) et une pétition pour établir une connexion vocale avec lesdits au moins deux dispositifs de terminaison (B, C) ;
dans lequel, en réponse aux messages de service (4B, 4C), l'outil de gestion d'appels mis en œuvre par logiciel (SWB, SWC) dans chacun desdits au moins deux dispositifs de terminaison (B, C) est configuré de manière à générer un premier type de signal d'alerte (5B, 5C) apte à notifier, à un utilisateur, un appel de groupe entrant en provenance du dispositif d'origine (A) ;
dans lequel, après avoir initié le premier type de signal d'alerte (5B, 5C), l'outil de gestion d'appels mis en œuvre par logiciel (SWB, SWC) dans chacun desdits au moins deux dispositifs de terminaison (B, C) est configuré de manière à effectuer un appel de réponse (7B, 7C) vers au moins un second nœud de pont (142 ; 143) dudit au moins un nœud de pont, en réponse à une instruction d'acceptation de l'utilisateur respectif (6B, 6C), les appels de réponse (7B, 7C) étant effectués sur le réseau mobile terrestre public (132, 133) en utilisant un numéro de téléphone de réponse respectif (#2, #3) ;
dans lequel, en réponse à l'appel de réponse (7B, 7C), ledit au moins un second nœud de pont (142, 143) est configuré de manière à envoyer un second message de reconnaissance de pont (8B ; 8C) au nœud de serveur (110), le second message de reconnaissance de pont (8B ; 8C) spécifiant une seconde adresse de réseau du second nœud de pont (142, 143) ; et
en réponse aux premier et second messages de reconnaissance de pont (3A ; 8B, 8C), le nœud de serveur (110) est configuré de manière à envoyer un message d'invite de pont respectif (9A, 9B, 9C) aux premier et second nœuds de pont (141, 142, 143) ;
dans lequel, en réponse aux messages d'invite de pont (9A, 9B, 9C), les premier et second nœuds de pont (141, 142, 143) sont configurés de manière à occasionner (10A, 10B, 10C) des connexions (11AB, 11AC) entre le dispositif d'origine (A) et lesdits au moins deux dispositifs de terminaison (B, C) sur ledit au moins un pont de conférence (146, 147, 148) ;
**caractérisé en ce que** :
si une connexion (11AB) a été établie entre le dispositif d'origine (A) et au moins un premier dispositif (B) desdits au moins deux dispositifs de terminaison ; et
si aucune instruction d'acceptation de l'utilisateur n'a été reçue dans au moins un dispositif non connecté (C) desdits au moins deux dispositifs de terminaison au cours d'un intervalle de réponse après avoir initié le premier type de signal d'alerte (5C) :
le nœud de serveur (110) est configuré de manière à envoyer une notification d'appel en cours audit au moins un dispositif non connecté (C), et en réponse à cela, l'outil de gestion d'appels mis en œuvre par logiciel (SWC) dans ledit au moins un dispositif non connecté (C) est configuré de manière à générer un second type de signal d'alerte apte à notifier, à un utilisateur, un appel en cours auquel ledit au moins un dispositif non connecté (C) peut être connecté.

2. Système selon la revendication 1, dans lequel l'outil de gestion d'appels mis en œuvre par logiciel (SWA) dans le dispositif d'origine (A) est configuré de manière à sélectionner le premier numéro de téléphone (#1) sur la base d'un emplacement du dispositif d'origine (A).

3. Système selon l'une quelconque des revendications précédentes, dans lequel, en réponse au premier appel (2), le premier nœud de pont (141) est configuré de manière à envoyer un premier message de reconnaissance de pont (3A) au nœud de serveur (110), le premier message de reconnaissance de pont (3A) spécifiant une première adresse de réseau du premier nœud de pont (141).

4. Système selon la revendication 1, dans lequel l'outil de gestion d'appels mis en œuvre par logiciel (SWB, SWC) dans chacun des dispositifs de terminaison (B, C) est configuré de manière à sélectionner le numéro de téléphone de réponse (#2, #3) sur la base d'un emplacement respectif du dispositif de terminaison (B, C).

5. Système selon l'une quelconque des revendications 1 et 4, dans lequel le numéro de téléphone de réponse (#2, #3) est stocké dans le dispositif de terminaison (B, C).

6. Système selon la revendication 1, dans lequel une définition d'un groupe d'abonnés est stockée dans une base de données (115) accessible par le nœud de serveur (110), chacun des abonnés dans le groupe d'abonnés étant associé à un dispositif spécifique (A, B, C), et si une connexion (11AC) a été établie entre un ensemble de dispositifs (A, C) associé à un sous-groupe d'abonnés dans le groupe d'abonnés,
le nœud de serveur (110) est configuré de manière à envoyer une notification d'appel en cours à chaque dispositif non connecté (B) qui est associé à un abonné du groupe, mais qui n'est cependant pas inclus dans le sous-groupe, et en réponse à cela :
l'outil de gestion d'appels mis en œuvre par logiciel (SWB) dans chacun des dispositifs non connectés (B) est configuré de manière à générer un second type de signal d'alerte apte à notifier, à un utilisateur, un appel en cours auquel le dispositif non connecté (B) peut être connecté.

7. Système selon l'une quelconque des revendications 1 et 6, dans lequel, en réponse à une instruction d'utilisateur reçue désignant l'appel en cours, l'outil de gestion d'appels mis en œuvre par logiciel (SWC ; SWB) dans le dispositif non connecté (C ; B) est configuré de manière à effectuer l'appel de réponse (7C ; 7B) vers le second nœud de pont (143 ; 142) dudit au moins un nœud de pont sur le réseau mobile terrestre public (133 ; 132) en utilisant le numéro de téléphone de réponse (#3 ; #2).

8. Système selon l'une quelconque des revendications précédentes, dans lequel, dès lors qu'un appel de groupe a été établi entre le dispositif d'origine (A) et lesdits au moins deux dispositifs de terminaison (B, C), l'outil de gestion d'appels mis en œuvre par logiciel (SWA, SWB, SWC), dans chacun desdits dispositifs, est configuré de manière à :
générer la demande d'établissement d'appel (1) relativement à au moins un dispositif de terminaison supplémentaire à inclure dans l'appel de groupe, en réponse à une instruction d'établissement d'appel en provenance d'un utilisateur ;
envoyer une demande de déconnexion d'appel relativement au moins l'un desdits dispositifs (A, B, C), au nœud de serveur (110), en réponse à une instruction de déconnexion d'appel en provenance d'un utilisateur, le nœud de serveur (110) étant configuré de manière à amener un dispositif, spécifié dans la demande de déconnexion d'appel, à être déconnecté de l'appel de groupe ; ou
envoyer une demande de mise en sourdine relativement à au moins l'un desdits dispositifs (A, B, C), au nœud de serveur (110), en réponse à une instruction de mise en sourdine en provenance d'un utilisateur, le nœud de serveur (110) étant configuré de manière à occasionner une interruption temporaire dans le cadre d'un échange de données acoustiques entre un dispositif spécifié dans la demande de mise en sourdine et les autres dispositifs desdits dispositifs.

9. Procédé d'établissement d'un appel de groupe entre un dispositif d'origine (A) et au moins deux dispositifs de terminaison (B, C), les dispositifs d'origine et de terminaison (A ; B, C) ayant chacun accès à la fois à un réseau mobile terrestre public (131, 132, 133) et à un réseau de données mobile (121, 122, 123), les dispositifs d'origine et de terminaison (A ; B, C) incluant un outil respectif de gestion d'appels mis en œuvre par logiciel (SWA ; SWB, SWC) configuré de manière à assister un utilisateur dans le cadre d'un processus d'émission et de réception d'appels de groupe, le système comportant : un nœud de serveur (110) connecté au réseau de données mobile (121, 122, 123), et au moins un nœud de pont (141, 142, 143) connecté au nœud de serveur (110), au réseau de données mobile (121, 122, 123) et au réseau mobile terrestre public (131, 132, 133), le procédé comprenant les étapes ci-dessous consistant à :
recevoir, dans le nœud de serveur (110), une demande d'établissement d'appel (1) en provenance du dispositif d'origine (A), la demande d'établissement d'appel (1) étant générée par l'outil de gestion d'appels mis en œuvre par logiciel (SWA) dans le dispositif d'origine (A), en réponse à une instruction d'établissement d'appel en provenance d'un utilisateur du dispositif d'origine (A), la demande d'établissement d'appel (1) indiquant une identité respective desdits au moins deux dispositifs de terminaison (B, C) ; et
sur la base de la demande d'établissement d'appel (1), établir un appel de groupe entre le dispositif d'origine (A) et lesdits au moins deux dispositifs de terminaison (B, C) sur au moins un pont de conférence (146, 147, 148) dans ledit au moins un nœud de pont (141, 142, 143) ;
effectuer, par l'intermédiaire de l'outil de gestion d'appels mis en œuvre par logiciel (SWA) dans le dispositif d'origine (A), un premier appel (1) vers un premier nœud de pont (141) dudit au moins un nœud de pont sur le réseau mobile terrestre public (131) en utilisant un premier numéro de téléphone (#1) stocké dans le dispositif d'origine (A), en réponse à l'instruction d'établissement d'appel ;
envoyer, à partir du nœud de serveur (110), en réponse à la demande d'établissement d'appel (1), un message de service respectif (4B, 4C) à chaque dispositif parmi ledit au moins un dispositif de terminaison (B, C), les messages de service (4B, 4C) indiquant une identité du dispositif d'origine (A) et une pétition pour établir une connexion vocale avec lesdits au moins deux dispositifs de terminaison (B, C) ;
générer, dans l'outil de gestion d'appels mis en œuvre par logiciel (SWB, SWC) dans chacun desdits au moins deux dispositifs de terminaison (B, C), en réponse aux messages de service (4B, 4C), un premier type de signal d'alerte (5B, 5C) apte à notifier, à un utilisateur dudit au moins un dispositif de terminaison (B), un appel de groupe entrant en provenance du dispositif d'origine (A), dans lequel, après avoir initié le premier type de signal d'alerte (5B, 5C), le procédé comprend les étapes ci-dessous consistant à :
effectuer, par l'intermédiaire de l'outil de gestion d'appels mis en œuvre par logiciel (SWB ; SWC), dans chacun desdits au moins deux dispositifs de terminaison (B, C), un appel de réponse (7B, 7C) vers au moins un second nœud de pont (142 ; 143) dudit au moins un nœud de pont, en réponse à une instruction d'acceptation de l'utilisateur respectif (6B, 6C), l'appel de réponse (7B, 7C) étant effectué sur le réseau mobile terrestre public (132, 133) en utilisant un numéro de téléphone de réponse respectif (#2, #3) ;
envoyer, en réponse à l'appel de réponse (7B, 7C), un second message de reconnaissance de pont (8B ; 8C), du second nœud de pont (142, 143) au nœud de serveur (110), le second message de reconnaissance de pont (8B ; 8C) spécifiant une seconde adresse de réseau du second nœud de pont (142, 143) ; et
envoyer, en réponse aux premier et second messages de reconnaissance de pont (3A ; 8B, 8C), un message d'invite de pont respectif (9A ; 9B, 9C) aux premier et second nœuds de pont (141, 142, 143), le procédé comprenant en outre l'étape ci-dessous consistant à :
occasionner (10A, 10B, 10C), en réponse aux messages d'invite de pont (9A ; 9B, 9C), des connexions (11AB, 11AC) des premier et second nœuds de pont (141, 142, 143) entre le dispositif d'origine (A) et ledit au moins un dispositif de terminaison (B, C) sur ledit au moins un pont de conférence (146, 147, 148) ;
dans lequel, si une instruction d'utilisateur est reçue dans ledit au moins un second dispositif (C), laquelle instruction d'utilisateur désigne l'appel en cours, le procédé comprend en outre l'étape ci-dessous consistant à :
effectuer, par l'intermédiaire de l'outil de gestion d'appels mis en œuvre par logiciel (SWC), dans ledit au moins un second dispositif (C), l'appel de réponse (7C), au second nœud de pont (143) dudit au moins un nœud de pont, sur le réseau mobile terrestre public (133), en utilisant le numéro de téléphone de réponse (#3) ;
**caractérisé en ce que** :
si une connexion (11AB) a été établie entre le dispositif d'origine (A) et au moins un premier dispositif (B) desdits au moins deux dispositifs de terminaison ; et
si aucune instruction d'acceptation de l'utilisateur n'a été reçue dans au moins un dispositif non connecté (C) desdits au moins deux dispositifs de terminaison au cours d'un intervalle de réponse après avoir initié le premier type de signal d'alerte (5C), le procédé comprend en outre les étapes ci-dessous consistant à :
envoyer, à partir du nœud de serveur (110), une notification d'appel en cours audit au moins un dispositif non connecté (C) ; et
en réponse à cela, générer, dans l'outil de gestion d'appels mis en œuvre par logiciel (SWC) dans ledit au moins un dispositif non connecté (C), un second type de signal d'alerte apte à notifier, à un utilisateur, un appel en cours auquel ledit au moins un dispositif non connecté (C) peut être connecté.

10. Procédé selon la revendication 9, comprenant l'étape ci-dessous consistant à :
sélectionner, par l'intermédiaire de l'outil de gestion d'appels mis en œuvre par logiciel (SWA) dans le dispositif d'origine (A), le premier numéro de téléphone (#1), sur la base d'un emplacement du dispositif d'origine (A).

11. Procédé selon l'une quelconque des revendications 9 et 10, comprenant l'étape ci-dessous consistant à :
envoyer, en réponse au premier appel (2), un premier message de reconnaissance de pont (3A), du premier nœud de pont (141) au nœud de serveur (110), le premier message de reconnaissance de pont (3A) spécifiant une première adresse de réseau du premier nœud de pont (141).

12. Procédé selon la revendication 9, comprenant l'étape ci-dessous consistant à :
sélectionner, par l'intermédiaire de l'outil de gestion d'appels mis en œuvre par logiciel (SWB, SWC), dans chacun des dispositifs de terminaison (B, C), le numéro de téléphone de réponse (#2, #3), sur la base d'un emplacement respectif du dispositif de terminaison (B, C).

13. Procédé selon l'une quelconque des revendications 9 et 12, dans lequel le numéro de téléphone de réponse (#2, #3) est stocké dans le dispositif de terminaison (B, C).

14. Procédé selon la revendication 9, dans lequel une définition d'un groupe d'abonnés est stockée dans une base de données (115) accessible par le nœud de serveur (110), chacun des abonnés dans le groupe d'abonnés étant associé à un dispositif spécifique (A, B, C), et si une connexion (11AC) a été établie entre un ensemble de dispositifs (A, C) associé à un sous-groupe d'abonnés dans le groupe d'abonnés, le procédé comprend en outre les étapes ci-dessous consistant à :
envoyer, à partir du nœud de serveur (110), une notification d'appel en cours à chaque dispositif non connecté (B) qui est associé à un abonné du groupe, mais qui n'est cependant pas inclus dans le sous-groupe, et en réponse à cela :
générer, dans l'outil de gestion d'appels mis en œuvre par logiciel (SWB) dans chacun des dispositifs non connectés (B), un second type de signal d'alerte apte à notifier, à un utilisateur, un appel en cours auquel le dispositif non connecté (B) peut être connecté.

15. Procédé selon l'une quelconque des revendications 9 et 14, dans lequel, en réponse à une instruction d'utilisateur reçue désignant l'appel en cours, le procédé comprend l'étape ci-dessous consistant à :
effectuer, par l'intermédiaire de l'outil de gestion d'appels mis en œuvre par logiciel (SWC ; SWB) dans le dispositif non connecté (C ; B), l'appel de réponse (7C ; 7B) au second nœud de pont (143 ; 142) dudit au moins un nœud de pont sur le réseau mobile terrestre public (133 ; 132), en utilisant le numéro de téléphone de réponse (#3 ; #2).

16. Procédé selon l'une quelconque des revendications 9 à 15, dans lequel, dès lors qu'un appel de groupe a été établi entre le dispositif d'origine (A) et lesdits au moins deux dispositifs de terminaison (B, C), le procédé comprend les étapes ci-dessous consistant à :
générer la demande d'établissement d'appel (1) relativement à au moins un dispositif de terminaison supplémentaire à inclure dans l'appel de groupe, en réponse à une instruction d'établissement d'appel en provenance d'un utilisateur ;
envoyer une demande de déconnexion d'appel relativement au moins l'un desdits dispositifs (A, B, C), au nœud de serveur (110), en réponse à une instruction de déconnexion d'appel en provenance d'un utilisateur, le nœud de serveur (110) étant configuré de manière à amener un dispositif, spécifié dans la demande de déconnexion d'appel, à être déconnecté de l'appel de groupe ; ou
envoyer une demande de mise en sourdine relativement à au moins l'un desdits dispositifs (A, B, C), au nœud de serveur (110), en réponse à une instruction de mise en sourdine en provenance d'un utilisateur, le nœud de serveur (110) étant configuré de manière à occasionner une interruption temporaire dans le cadre d'un échange de données acoustiques entre un dispositif spécifié dans la demande de mise en sourdine et les autres dispositifs desdits dispositifs.

17. Produit-programme informatique pouvant être chargé dans la mémoire d'au moins un processeur, comprenant un logiciel pour exécuter le procédé selon l'une quelconque des revendications 9 à 16, lorsque ledit produit-programme informatique est exécuté sur ledit au moins un processeur.

18. Support lisible par processeur comprenant des instructions qui, lorsqu'elles sont exécutées par au moins un processeur, amènent ledit au moins un processeur à mettre en œuvre un procédé selon l'une quelconque des revendications 9 à 16.
